# EUROPÄISCHE PATENTSCHRIFT

(11) **EP 1 313 569 B1**
(45) Veröffentlichungstag und Bekanntmachung des Hinweises auf die Patenterteilung: **10.12.2008**
(21) Anmeldenummer: 01971946.7
(22) Anmeldetag: 21.08.2001
(51) Int. Cl.: B05D 1/00, C04B 41/45, C08J 7/00, A23L 1/00, A01C 1/00

(54) **VERFAHREN ZUM IMPRÄGNIEREN EINER TRÄGERMATRIX MIT FESTEN UND/ODER FLÜSSIGEN VERBINDUNGEN MIT HILFE KOMPRIMIERTER GASE**
METHOD FOR IMPREGNATING A SUPPORT MATRIX WITH SOLID AND/OR LIQUID COMPOUNDS USING COMPRESSED GASES
PROCEDE D'IMPREGNATION D'UNE MATRICE DE SUPPORT AVEC DES COMPOSES SOLIDES ET / OU LIQUIDES A L'AIDE DE GAZ COMPRIMES

(30) Priorität: 22.08.2000 DE 10041003
(43) Veröffentlichungstag der Anmeldung: 28.05.2003
(73) Patentinhaber: Evonik Degussa GmbH, 45128 Essen (DE)
(72) Erfinder: HEIDLAS, Jürgen, 83308 Trostberg (DE); ZHANG, Zhengfeng, 83308 Trostberg (DE); STORK, Kurt, 93326 Abensberg (DE); WIESMÜLLER, Johann, 84518 Garching (DE); OBER, Martin, 83352 Altenmarkt (DE); OBERSTEINER, Johann, 84550 Feichten (DE)
(74) Vertreter: Dey, Michael
(86) Internationale Anmeldenummer: PCT/EP2001/009669
(87) Internationale Veröffentlichungsnummer: WO 2002/020177

(56) Entgegenhaltungen:
- WO-A-95/02449
- DE-A- 3 618 630
- DE-A- 19 503 464
- FR-A- 2 674 872
- GB-A- 834 284
- US-A- 3 632 409

## Beschreibung

Gegenstand der vorliegenden Erfindung ist ein Verfahren zum Imprägnieren einer Trägermatrix mit festen und/oder flüssigen Verbindungen mit Hilfe komprimierter Gase oder Gasgemische.

In den letzten 20 Jahren hat sich der Einsatz komprimierter Gase als Lösemittel in der Industrie erkennbar entwickelt. Nachdem in den 80er Jahren vornehmlich die Extraktion von Naturstoffen, wie z.B. Verfahren zur Entkoffeinierung, eine Rolle spielten, hat sich das Einsatzpotential komprimierter Gase in den 90er Jahren zu den "Materialwissenschaften" hin verschoben: So werden überkritische Gase nun auch u.a. bei chemischen Prozessen zur Reduktion der Viskosität von Lösungen oder zur Herstellung ultrafeiner Partikel eingesetzt. Für die nächste Zukunft wird erwartet, dass überkritische Gase zunehmend in der chemischen Prozesstechnik Einsatz finden werden.

Aufgrund seiner inerten Eigenschaften, der toxikologischen Unbedenklichkeit, der Verfügbarkeit sowie der physikalischen und physikalisch-chemischen Eigenschaften spielt das Kohlendioxid die wichtigste Rolle, wenn es um überkritische Lösemittel in der Verfahrenstechnik allgemein geht (McHugh & Krukonis, Supercritical Fluid Extraction, 2nd Edition, Butterworth-Heinemann, Boston, 1994).

Wesentliche Motivation, Gase im überkritischen Zustand einzusetzen, ist oftmals deren deutlich geringere Viskosität im Vergleich zu "flüssigen" Lösemitteln und die Tatsache, dass man die Dichte im überkritischen Zustand über eine Variation des Verfahrensdruckes kontinuierlich in einem weiten Bereich steuern kann. Da die Dichte des überkritischen Gases vereinfacht dargestellt mit dessen Lösevermögen korreliert, bieten sich ideale Voraussetzungen, um selektive Extraktionen oder Stofftrennungen durchzuführen. Nach dem Stand der Technik sind viele Verfahrensbeispiele beschrieben, bei denen die Selektivität der Extraktion, insbesondere bei Naturstoffen, die entscheidende Rolle spielt, was den Einsatz überkritischer Gase unter wirtschaftlichen Gesichtspunkten rechtfertigt (Stahl et al., Verdichtete Gase zur Extraktion und Raffination, Springer, Heidelberg, 1987).

Aufgrund der o.g. Eigenschaften können Gase im komprimierten Zustand aber nicht nur zur selektiven Extraktion von Stoffen, also zu Stofftrennungen, eingesetzt werden, sondern auch für eine Imprägnierung, d.h. Ablagerung von sogenannten "Imprägnierstoffen" auf einer Trägermatrix. Dabei spielt wiederum die aufgrund der niedrigen Viskosität sehr hohe Diffusivität der überkritischen Gase, d.h. deren Fähigkeit, sehr leicht in eine "kompakte" und nur schwer zugängliche Matrix eindringen zu können, eine wichtige Rolle. Über die gezielte Steuerung der Löseeigenschaften kann ein Imprägnierstoff gezielt in der Trägermatrix abgelagert werden.

Nach dem Stand der Technik werden beispielsweise gemäß der deutschen Patentschrift DE 21 27 642 zunächst Aromastoffe aus Tee extrahiert und gesammelt, daraufhin das Coffein aus dem Tee entfernt und anschließend die Aromastoffe wieder auf den entkoffeinierten Tee aufgezogen ("Aufimprägnieren"). Dabei wird die Extraktion der Aromastoffe mit trockenem Kohlendioxid durchgeführt, während die Extraktion des Coffeins unter Zuhilfenahme von Wasser. als Schleppmittel geschieht. Das Aufbringen der Aromastoffe in die Teematrix ist verfahrenstechnisch einfach, da die Aromastoff-Fraktion eine sehr gute Löslichkeit im Kohlendioxid aufweist und die Teematrix leicht zugänglich ist. Zudem ist es nicht von Bedeutung, wie "tief" die Aromastoffe in die Matrix eindringen, da eine einigermaßen gleichmäßige Verteilung *auf* den einzelnen Partikeln des Tees ausreicht.

Zwar gibt es nach dem Stand der Technik, wie oben beispielhaft aufgeführt, Verfahren mit Hilfe überkritische Gase, bei denen Imprägnierstoffe auf einer Trägermatrix abgelagert und unter Voraussetzung einer entsprechenden Löslichkeit der Imprägnierstoffe im Gas sowie einer relativ leichten Zugänglichkeit der Trägermatrix auch in eine Trägermatrix eingebracht werden können. Falls allerdings die Löslichkeit der Imprägnierstoffe im Gas gering ist und die Zugänglichkeit der Trägermatrix, z.B. durch ungünstige Verteilungskoeffizienten der Imprägnierstoffe zwischen Gas und Trägermatrix, begrenzt ist, stehen keine zufriedenstellenden Verfahren zur Verfügung, um die Imprägnierstoffe wirtschaftlich in die Trägermatrix einbringen zu können. Unter geringer Löslichkeit versteht man insbesondere, wenn 30 bis 100 Teile (wenig löslich), 100 - 1 000 Teile (schwer löslich) oder 1 000 oder mehr Teile, insbesondere bis 10 000 Teile (sehr schwer löslich) des Lösungsmittels zum Lösen von 1 Teil Imprägnierstoff erforderlich sind.

Aufgabe der vorliegenden Erfindung war es somit, ein Verfahren zur Imprägnierung einer Trägermatrix mit festen und/oder flüssigen Verbindungen mit Hilfe komprimierter Gase zu entwickeln, bei dem die Imprägnierstoffe effizient von der Oberfläche in das Innere der jeweilige Trägermatrix transportiert werden können, wobei ein möglichst breites Anwendungsspektrum abgedeckt werden sollte.

Diese Aufgabe wurde erfindungsgemäß dadurch gelöst, dass die feste(n) und/oder flüssige(n) Verbindung(en) (Imprägnierstoff) und die unlösliche Trägermatrix mit einem komprimierten Gas(-gemisch) bei Gasdichten von mindestens 0,15 bis 1,3 kg/l unter mindestens 2, bevorzugt mindestens 3, mehr bevorzugt mindestens 5 und besonders bevorzugt mindestens 10, unsymmetrisch verlaufenden Druckwechselabfolgen (Pulsationen) in der Weise in Kontakt gebracht werden, dass pro Einzelpulsation mit einer Dauer von mindestens 5 s bis 60 min, bevorzugt von mindestens 50 s bis 20 min, besonders bevorzugt von mindestens 100 s bis 10 min, die jeweilige Zeitspanne zum Erreichen des Druckmaximums größer ist als die Zeitspanne der Druckabsenkung zum Minimum und wobei die Imprägnierung im überkritischen Zustand erfolgt.

Mit diesem Verfahren wird vorzugsweise die unterschiedliche Löslichkeit der Imprägnierstoffe bei unterschiedlichen Dichten der komprimierten Gase im nahe-kritischen Bereich ausgenutzt, um den Imprägnierstoff aktiv von außen in das Innere der Trägermatrix zu transportieren. Der nahe-kritische Bereich wird im Allgemeinen definiert mit einer reduzierten Temperatur eines komprimierten Gases im Bereich von, 0,9 bis 1,5 und einem reduzierten Druck im Bereich von 0,8 bis 5, wobei diese genannten Differenzbeträge jeweils die Verhältnisse der Betriebstemperatur bzw. des Betriebsdrucks zu der kritischen Temperatur bzw. zum kritischen Druck darstellen.

Überraschenderweise ist es mit dem erfindungsgemäßen Verfahren und insbesondere den Pulsationen möglich, kinetische Lösungseffekte auszunutzen, um einen aktiven Stofftransport der Imprägnierstoffe von außen nach innen in die Trägermatrix zu erzielen: Bei einer Druckerhöhung in den überkritischen Zustand erhöht sich nämlich die Dichte des Gases und somit auch dessen Lösevermögen für die Imprägnierstoffe. Ausgehend von einer geringen Gasdichte und hin zu einer höheren führt dies zu einem Influx des Gases in die Trägermatrix, wobei die hohe Diffusivität des Gassystems im überkritischen Zustand ein besonderer Vorteil ist. Desweiteren hat sich gezeigt, dass aufgrund der ansteigenden Gasdichte gleichzeitig auch die Imprägnierstoffe besser im Gas gelöst und zusammen mit dem Influx des Gases in die Matrix hineintransportiert werden. Schließt man nun Adsorptions- und Stoffverteilungseffekte in der Matrix aus, dann würde bei einer Reduktion der Gasdichte, also einer Druckerniedrigung, der Imprägnierstoff wieder mit dem Efflux des Gases aus der Matrix mit austreten. Dies wird aber überraschenderweise im wesentlichen dadurch vermieden, dass die Zeitspanne zur Druckerniedrigung kürzer ist, als die Zeitspanne zur Druckerhöhung. Bei einer kurzen Entspannungszeit fällt dann nämlich der gewünschte Stoff in der Matrix irreversibel aus, während bei der vorhergehenden langsameren Druckerhöhung genug Zeit verbleibt, dass sich die lmprägnierstoffe im Gas(-gemisch) lösen und mit ihm in die Matrix transportiert werden. Diese Effekte waren in dieser Deutlichkeit nicht vorherzusehen.

Die Anzahl der Druckpulsationen, die Zeit der Pulsationszyklen sowie die Druck- bzw. Dichtedifferenzen richten sich in der Regel nach dem Imprägnierstoff, nach der Trägermatrix, die imprägniert werden soll, den Anlagen-technischen Voraussetzungen, sowie nach dem Ziel, in welchem Ausmaß die gewünschten Imprägnierstoffe in die/der Matrix verteilt werden sollen.

Als erfindungswesentlich ist u.a. anzusehen, dass die Zeitspanne zur Erreichung des jeweiligen Peakmaximums (t_{to max}) pro Pulsation größer ist als die Zeitspanne zur Druckabsenkung zum Peakminimum (tₜₒ min): t_{to max} > t_{to min}. Je nach Größe der Produktionsanlage liegt die Dauer einer Einzelpulsation bei mindestens 5 s bis 60 min, bevorzugt bei mindestens 50 s bis 20 min, besonders bevorzugt bei mindestens 100 s bis 10 min. Es hat sich als verfahrenstechnisch günstig erwiesen, wenn t_{to max} >> t_{to min}, wobei t_{to max} insbesondere 5 bis 30 mal, vorzugsweise 9 bis 25 mal größer ist als t_{to min}, da dann ein Rücktransport der Imprägnierstoffe aus der Trägermatrix am effektivsten zurückgedrängt werden kann. Allerdings kann die minimale Zeitspanne zur Druck- bzw. Dichtereduktion auch dadurch begrenzt werden, dass die Trägermatrix durch den schnellen Dichtewechsel "instabil", d.h. beschädigt wird und dabei insbesondere förmlich "zerplatzt". Jedoch kann der Verfahrensverlauf empirisch so eingestellt werden, dass diese Schädigung der Matrix ausgeschlossen werden kann.

Das vorliegende Verfahren kann für die Herstellung einer Vielzahl von Produkten und Zwischenprodukten eingesetzt werden, bei denen Imprägnierstoffe in eine Trägermatrix eingebracht werden. Als geeignete Vertreter für lmprägnierstoffe haben sich alle biologisch aktiven Verbindungen, wie pharmazeutische, agrochemische und kosmetische Wirkstoffe, technische Stoffe, wie z.B. oberflächenaktive oder oberflächenverändernde Mittel (Hydrophobisierung oder Hydrophilisierung) oder metallorganische Verbindungen erwiesen. In diesem Zusammenhang werden insbesondere Vitamine, Nutraceuticals, Pflanzenbehandlungsmittel, Insektizide, Fungizide, Herbizide (also Biozide allgemein), Phytohormone wie z.B. Cytokinine, aber auch Aromastoffe, Farbstoffe und andere Imprägnierstoffe, die eine andere Funktionalität besitzen, wie Dispergiermittel, Emulgatoren oder chemisch reaktive Verbindungen, wie z.B. oberflächenreaktive Verbindungen, herangezogen. Es ist somit im Rahmen der vorliegenden Erfindung auch möglich, dass nach dem Einbringen der Imprägnierstoffe in die Trägermatrix eine chemische Reaktion in-situ im Prozess, z.B. durch Temperaturerhöhung oder Einspeisen von Reaktionsstartern, induziert wird, um eine chemische Bindung des Imprägnierstoffes auf der Trägermatrix zu erzielen.

Einzige Voraussetzung für die Eignung als Imprägnierstoff ist dessen Fähigkeit, sich im komprimierten Gas(-gemisch) zu lösen.

Bevorzugte Vertreter für Trägermatrices sind alle Materialien biologischen Ursprunges, wie z.B. Lebensmittel, Futtermittel, Saatgut, sowie andere organische und anorganische Trägermatrices, die vorzugsweise große und/oder schwer zugängliche innere Oberflächen aufweisen. Dies schließt auch Trägermatrices ein, die unter den Verfahrensbedingungen ihr Volumen vergrößern, was meist durch Quellen geschieht und wodurch die äußeren wie auch deren innere Oberflächen zunehmen.

Insbesondere geeignet sind erfindungsgemäß synthetische, semi-synthetische und natürliche organische Polymere, wie z.B. Polyethylene (PE), Polypropylene (PP) oder Polyglykolsäuren (beispielsweise Polylactic-glycolic acid, PLGA) oder Kohlenhydrate, wie z.B. Stärken und Cyclodextrine, außerdem anorganische Trägerstoffe, insbesondere solche mit großen inneren Oberflächen, beispielsweise Siliciumdioxide, wie gefällte oder pyrogene Kieselsäuren oder Kieselgele, Alumosilicate oder andere Katalysatorgrundstoffe, wie z.B. Zeolithe, sowie Aluminiumoxide, Aktivkohlen, Titandioxide, Bentonite, die alle auch chemisch oder physikalisch modifiziert eingesetzt werden können. Die Trägermatrices mit offen- oder geschlossenporiger Innenstruktur, können dabei (vor-)gequollen serin oder extrudierte oder geschäumte Matrices darstellen.

Praktisch kann beim vorliegenden Verfahren ein sehr großer Dichtebereich der komprimierten, also nahe- bzw. überkritischen Gase oder Gasmischungen ausgenutzt werden; er liegt in den erfindungswesentlichen Grenzen von mindestens 0,15 bis 1,3 kg/l, bevorzugt von mindestens 0,4 bis 1,0 kg/l und besonders bevorzugt von mindestens 0,5 bis 0,9 kg/l. Um diese Dichten prozesstechnisch einstellen zu können, variieren die Verfahrensdrücke gemäß Erfindung von mindestens 5 bis 800 bar, wobei Druckbereiche von mindestens 30, insbesondere mindestens 50 bis 500 bar bevorzugt werden. Die Verfahrenstemperatur sollte vorzugsweise über der kritischen Temperatur des eingesetzten Gases oder der Gasmischung liegen, insbesondere bei mindestens 31 °C bis 200°C, vorzugsweise bei mindestens 40°C bis 150 °C, besonders bevorzugt bei mindestens 50 °C bis 100 °C.

Auch die Auswahl des geeigneten Gases bzw. der geeigneten Gasmischungen richtet sich im Wesentlichen nach dem Imprägnierstoff oder der Mischung verschiedener Imprägnierstoffe, die in die Trägermatrix eingebracht werden sollen. Grundsätzlich kommen daher Gase/Gasmischungen in Frage, deren kritische Zustandsparameter in technisch praktikablen Grenzen liegen. Von besonderer Bedeutung ist u.a. die kritische Temperatur des Gassystems, die ggf. bei zu hohen Werten eine thermische Schädigung sowohl der Imprägnierstoffe als auch der Trägermatrix verursachen kann. Als geeignete Gase haben sich somit für das vorliegende Verfahren Kohlendioxid, Propan, Butane, Ethan, Ethylen, Dimethylether, Ammoniak, halogenierte Kohlenwasserstoffe, umfassend fluorierte, chlorierte, bromierte und jodierte verzweigte oder unverzweigte Kohlenwasserstoffe von C₁ bis C₄, insbesondere teil- oder vollfluorierte Kohlenwasserstoffe, oder deren Mischungen erwiesen.

Das erfindungsgemäße Verfahren macht sich zunutze, dass die Imprägnierstoffe im Peakmaximum des Druckes eine z.T. wesentlich höhere Löslichkeit im Gas(gemisch) besitzen als im Talminimum des Druckes. Dagegen muss die Imprägniermatrix, also die Trägermatrix, unter den vorliegenden Verfahrensbedingungen unlöslich sowohl im nahe- als auch im überkritischen Zustand des Gas(gemisch)es sein. Das absolute Druckminimum wird dabei durch das minimale Lösevermögen des Gas(-gemisch)es für den Imprägnierstoff und das absolute Druckmaximum durch die maximale Löslichkeit der Imprägnierstoffe im komprimierten Gas(-gemisch) festgelegt.

Der Druckbereich vom absoluten Druckminimum bis zum absoluten Druckmaximum stellt den Bereich dar, in dem grundsätzlich gearbeitet werden kann, der aber nicht vollständig ausgenutzt werden muss.

Bevorzugt beträgt der Druck im Druckmaximum eines Pulses das 1,1 fache, mehr bevorzugt das 1,3fache, noch mehr bevorzugt das 1,5fache, noch mehr bevorzugt das 2fache , am meisten bevorzugt das 5fache des Druckes am Druckminimum. Weiterhin ist es bevorzugt, den Druck im Druckmaximum so einzustellen, dass er mindestens 1 bar, bevorzugt mindestens 5 bar, mehr bevorzugt mindestens 10 bar und am meisten bevorzugt mindestens 20 bar höher ist als der Druck im Druckminimum. Dabei ist das Lösevermögen des Gas(-gemisch)es im Druckmaximum bevorzugt mindestens 2 mal, bevorzugt mindestens 10 mal besser als das Lösevermögen des Gas(-gemisch)es im Druckminimum.

Um einen möglichst effektiven Stofftransport der Imprägnierstoffe von der Oberfläche in das Innere der Trägermatrix zu erzielen, sollte der Dichteunterschied während der Einzelpulsation möglichst groß sein. Die sinnvollste praktische Untergrenze des Dichteminimums liegt dann vor, wenn die Gase oder die Gasgemische kein Lösevermögen mehr für die Imprägnierstoffe besitzen. Hinsichtlich der Dichte gibt es für das Verfahren prinzipiell keine Obergrenze im Peakmaximum. Da das Verfahren jedoch auf dem Transportprinzip des Gasinflux bzw. Gasefflux in die Trägermatrix bei unterschiedlichen Dichten basiert, ist es praktisch nicht sehr sinnvoll und auch meist unwirtschaftlich, mehr als das 10fache des überkritischen Druckes des entsprechenden Gases oder der Gasmischung einzusetzen, da dann die Dichte deutlich geringere Veränderungen erfährt, als im nahe-kritischen Zustandsbereich des Gassystems.

Bezüglich der Einzelpulsationen, die immer aus der Summe der beiden Zeitspannen für die Druckerhöhung und die Druckabsenkung bestehen, sieht die Erfindung vor, dass deren Dauern voneinander abweichen können. Das heisst, die Dauer einer Einzelpulsation kann im Vergleich zur Vorangehenden und/oder Nachfolgenden kürzer oder auch länger sein, wobei eine Einzelpulsation von mindestens 5 s bis 60 min, bevorzugt von mindestens 50 s bis 20 min, besonders bevorzugt von mindestens 100 s bis 10 min, dauert.

In bestimmten Verfahrensvarianten kann es aber auch notwendig sein, dass die jeweiligen Zeitspannen innerhalb unterschiedlicher Einzelpulsationsdauern voneinander abweichen, was nichts anderes bedeutet, als dass die Zeitspannen für die Druckerhöhung und/oder die Zeitspannen für die Druckabsenkung von Einzelpulsation zu Einzelpulsation voneinander abweichen. Wichtig ist dabei aber, dass auch in diesen Fällen pro Einzelpulsation die Zeitspanne für die Druckerhöhung immer größer ist als die Zeitspanne für die Druckabsenkung. Es ist auch möglich, die Druckminima oder/und Druckmaxima in den einzelnen Pulsen unterschiedlich zu wählen.

Dem nahe-kritischen Gas bzw. den Gasmischungen können aber auch - besonders bevorzugt unter Normaldruck - flüssige Hilfsstoffe zugesetzt werden, welche insbesondere die Löslichkeit der Imprägnierstoffe verbessern. Solch geeignete Hilfsstoffe sind z.B. Wasser oder organische Lösemittel, aus der Reihe kurzkettige Alkohole, Ketone und Ester, verzweigt oder unverzweigt mit Kettenlängen von C, bis C₁₀, bevorzugt C, bis C₈, besonders bevorzugt C₂ bis C₃, und/oder mit oberflächenaktiver Wirkung, die typischerweise in Konzentrationen bis zu 20 Gew.-%, bevorzugt von 1 Gew.-% bis zu 10 Gew.-%, besonders bevorzugt von 2 Gew.-% bis zu 5 Gew.-%, eingesetzt werden können. Grundsätzlich können aber auch Schleppmittel eingesetzt werden, die beispielsweise ein geeignetes pH-Wert-Milieu im Prozessgas einstellen. Insbesondere geeignet sind dafür organische Amine, wie beispielsweise Triethylamin, oder Ammoniak, durch die die Löslichkeit der lmprägnierstoffe zusätzlich verbessert werden kann.

Dabei können die bevorzugt genannten, aber auch alle anderen geeigneten Hilfsstoffe und/oder Schleppmittel ebenfalls dem Imprägnierstoff zugegeben werden, was wieder bevorzugt unter Normaldruck erfolgen sollte. Andere Stoffe, die sowohl als eigentliche Imprägnierstoffe als auch als Hilfsstoffe eingesetzt werden können, sind oberflächenaktive Substanzen, da sie selbst eine gute Löslichkeit im überkritischen Gas(-gemisch) besitzen (sogenannten "gas-phile Tenside"). Mit Hilfe der Tenside wird nicht nur die Löslichkeit bestimmter Imprägnierstoffe im Gas(-gemisch) verbessert, wobei die Tenside in diesem Fall als Hilfsstoff fungieren, sondern auch die Penetration der Imprägnierstoffe in die Trägermatrix erleichtert, da die Diffusivität des Stoffsystems Imprägnierstoffe/Gas(-gemisch) durch eine weitere Reduktion der Oberflächenspannung erhöht wird. Werden die "gas-philen Tenside" aber als eigentliche Imprägnierstoffe eingesetzt, kann das Ziel des Imprägnierverfahrens die Veränderung der Oberflächeneigenschaften der Trägermatrix sein, wie beispielsweise die Verbesserung oder Reduktion von deren Wasserbenetzbarkeit und der damit verbundenen Eigenschaften.

Hinsichtlich der Ausführungsform des Verfahrens sind im Rahmen der vorliegenden Erfindung verschiedene Varianten möglich, da sich das erfindungsgemäße Verfahren ganz allgemein auf den Transport der Imprägnierstoffe in die Trägermatrix beschränkt, und nicht die Art und Weise beansprucht, wie die Imprägnierstoffe auf der Oberfläche der Trägermatrix deponiert werden sollen.

Typischerweise wird das Verfahren in einem Autoklaven und bevorzugt in einem diskontinuierlichen Batch-Prozess durchgeführt.

In einer speziellen Variante ist für das erfindungsgemäße Verfahren als Vorstufe vorgesehen, dass nach dem Befüllen des Autoklaven mit der Trägermatrix und den Imprägnierstoffen das Anlagensystem mit der geeigneten Gas(-mischung) auf den entsprechenden Druck gebracht wird, bei dem die Imprägnierstoffe das oben beschriebene Löslichkeitsverhalten zeigen. Dann wird das Gas oder die Gasmischung im überkritischen Zustand so im Kreis gefahren, dass sich die Imprägnierstoffe auf der Trägermatrix verteilen und der Konzentrationsgradient der Wirkstoffe im Bett der Trägermatrix einen akzeptabel minimalen Wert erreicht. Anschließend wird der Verfahrensdruck - und damit die Dichte des Gassystems - so reduziert, dass sich die Imprägnierstoffe auf den Oberflächen der Trägermatrix ablagern (präzipitieren; deponieren). Zwar können bei dieser Verfahrensweise aufgrund der guten Diffusivität der Gas(-gemische) im überkritischen Zustand bereits Teile der Wirkstoffe in das Innere der Trägermatrix eindringen, jedoch verbleibt dabei ein signifikanter Anteil immer auf der Oberfläche der Trägermatrix, da dieser Imprägnierstoff-Anteil sich dort aus der Gasphase des Zwischenkorn-Volumens abscheidet. Anschließend wird, wie oben beschrieben, die eigentliche und erfindungswesentliche Pulsation durchgeführt, um den Transport von außen in das Innere der Trägermatrix zu erreichen.

Unter praktischen und vor allem wirtschaftlichen Gesichtspunkten kann auch eine alternative Vorgehensweise geeignet sein, insbesondere dann, wenn die Löslichkeit der Imprägnierstoffe auch im überkritischen Zustand des Gas(-gemisch)es nur gering ist, und eine lange Prozesszeit zur Umwälzung des Gases oder der Gasmischung im Autoklaven benötigt wird, um eine gewünschte Verteilung im Schüttbett der Trägermatrix zu erzielen, d.h. deren Konzentrationsgradienten im Schüttbett zu minimieren. Für diese Fälle sieht die Erfindung das Vorbelegen ("Coating") der Trägermatrix mit den Imprägnierstoffen mittels konventioneller Techologie, wie insbesondere die bekannten Verfahren zum Sprüh-Coating, insbesondere in der Wirbelschicht, oder auch Schmelz-Coating, vor. Dabei werden die Imprägnierstoffe auf die Wand der Trägermatrix-Partikel aufgezogen, ohne dass die Imprägnierstoffe allerdings wesentlich in den inneren Bereich der Matrix-Partikel eindringen können. Das so vorbereitete Material wird anschließend ebenfalls dem erfindungswesentlichen Pulsationsverfahren zur Imprägnierung unterzogen, wodurch die Imprägnierstoffe erst dann ins Innere der Trägermatrix transportiert werden. Diese Vorgehensweise kann enorme wirtschaftliche Vorteile aufweisen, da der tatsächliche Transportweg, der mit dem im Gas(-gemisch) gelösten Imprägnierstoff überwunden werden muss, sehr kurz ist, nämlich lediglich von der Oberfläche der Matrixpartikel in deren Inneres. Zudem kann über diese Vorgehensweise deutlich besser die individuelle Beladung der Matrixpartikel mit Imprägnierstoff kontrolliert und sichergestellt werden.

Ein großes Potential besitzt das vorliegende Verfahren somit vor allem für das Einbringen von pharmazeutischen Wirkstoffen in eine geeignete Trägermatrix mit einer großen inneren Oberfläche, wie es bei der Herstellung von Präparaten mit verzögerter Wirkstoff-Freisetzung notwendig ist.

Ein weiteres Anwendungsbeispiel ist die Imprägnierung oder das Beizen von Saatgut, wobei der entscheidende Vorteil des erfindungsgemäßen Verfahrens darin besteht, dass die Pflanzenbehandlungsmittel nicht - wie bisher nach dem Stand der Technik - ausschließlich in den äußeren Bereichen des Saatkornes verbleiben, sondern in den inneren Bereich des Samenkörpers eingebracht werden können. Dies kann bei bestimmten Anwendungen zur einer besseren Wirkung bei gleichzeitig geringerer Dosierung führen.

Schließlich können als Imprägnierstoffe auch metallorganische Stoffe eingesetzt werden, die in eine Matrix eingebracht werden sollen, wie es insbesondere bei der Herstellung Träger-gestützter Katalysatoren üblich ist.

Die folgenden Beispiele sollen die Vorteile des erfindungsgemäßen Verfahrens und der damit hergestellten Stoffe veranschaulichen.

### Beispiele

### Beispiel 1: Imprägnierung eines kompakten pflanzlichen Materials (Reiskörner) mit lipophilen Imprägnierstoffen (β-Carotin als Markersubstanz)

### 1.1 Unsymmetrische Pulsationszyklen (Erfindung):

Auf 2 kg handelsübliche, geschälte Reiskörner als Trägermatrix (Schüttdichte ca. 0,6 kg/l) wurden bei Raumtemperatur in einer Rührtrommel 100 ml eines pflanzlichen Öles, das ca. 3 Gew.-% ß-Carotin enthielt (Imprägnierstoff) mittels einer feinen Düse aufgesprüht, während die Trommelfüllung ca. 30 Minuten gut durchmischt wurde. Dadurch wurde ein gleichmäßiges Aufbringen des farbstoffhaltigen Öles auf die Oberfläche der Reiskörner erreicht. Die lichtmikroskopische Untersuchung des Querschnitts eines Einzelkorns zeigte, dass nur der Randbereich der Querschnittfläche eine Rotfärbung durch den Farbstoff aufwies. Anschließend wurde das so vorbehandelte Ausgangsmaterial in einen Einsatzbehälter (Volumen 3,5 I) eingebracht, der mit Metallsinter-Platten oben und unten verschlossen wurde. Der Einsatzbehälter, der vollständig mit Reiskörnern gefüllt war, wurde in den Druckautoklaven einer Hochdruckextraktions-Anlage eingesetzt. Die Autoklav wurde zunächst bei 50 °C (eingestellt mittels Mantelheizung) mit Kohlendioxid auf einen Druck von 150 bar gebracht (Druckminimum). Der Druck wurde dann über einen Zeitraum von 5 min mit Hilfe einer Hochdruckpumpe langsam auf 500 bar erhöht (Druckmaximum) und anschließend innerhalb von 15 s wieder schnell über ein Druckregelventil auf 100 bar reduziert. Dieser Pulsationsvorgang wurde in gleicher Weise 20 mal wiederholt. Nach dem Entspannen der Anlage auf Atmosphärendruck wurden die Reiskörner entnommen und das Ergebnis der Imprägnierung mit dem Ausgangsmaterial verglichen. Die rotgefärbte Farbstoffzone war aus dem Randbereich verschwunden und im Lichtmikroskop war eine gleichmäßige Färbung des Stärkekörpers über den gesamten Querschnitt des Reiskornes mit β-Carotin festzustellen.

### 1.2 Symmetrische Pulsationszyklen (Vergleich):

Reiskörner wurden analog Beispiel 1.1 vorbehandelt, wobei die eigentliche. Imprägnierung im gleichen Druckbereich mit 20 Pulsationen symmetrisch durchgeführt wurde, d.h. die Zeit für den Druckanstieg zum Maximum war identisch mit der Zeit für die Druckabsenkung zum Minimum, nämlich jeweils 2,5 min.

Die lichtmikroskopische Untersuchung des Querschnitts eines so behandelten Reiskorn zeigte lediglich eine undeutliche und verwaschene Farbstoffzone im Randbereich, der Farbstoff ß-Carotin war aber nicht über die gesamte Querschnittsfläche des Kornes verteilt.

### Beispiel 2: Imprägnierung einer porösen anorganischen Trägermatrix (Endobon^{®)} mit einem pharmazeutischen Wirkstoff (Ketoprofen)

5 g Ketoprofen wurden in 150 ml Methanol gelöst und die Lösung zusammen mit 15 g Endobon**^{®}** (Fa. Merck; poröses Hydroxyapatit-Granulat; (∅ 2,8 bis 5,6 mm) in einen Rundkolben überführt. Im Vakuum wurde das Lösemittel an einem Rotationsverdampfer unter Bewegung abgezogen.

Das so vorbehandelte Ausgangsmaterial wurde in einen Einsatzbehälter (Volumen 0,5 I) eingebracht, der mit Metallsinter-Platten oben und unten verschlossen wurde. Der Einsatzbehälter wurde in den Druckautoklaven einer Hochdruckextraktions-Anlage eingesetzt. Die Autoklav wurde zunächst bei 50 °C (eingestellt mittels Mantelheizung) mit Kohlendioxid, das 1 Gew.-% Methanol als Schleppmittel enthielt, auf einen Druck von 100 bar gebracht (Druckminimum). Der Druck wurde dann über einen Zeitraum von 3 min mit Hilfe einer Hochdruckpumpe langsam auf 250 bar erhöht (Druckmaximum) und anschließend innerhalb von 20 s schnell über ein Druckregelventil auf 100 bar reduziert. Dieser Pulsationsvorgang wurde in gleicher Weise 10 mal wiederholt. Nach dem Entspannen der Anlage auf Atmosphärendruck wurde die imprägnierte Trägermatrix entnommen.

Zur Charakterisierung wurde die Freisetzungsrate des Ketoprofens auf der Trägermatrix in einem Dissolutions-Test bestimmt und mit einem Ausgangsmaterial, das nicht der Pulsations-Imprägnierung unterworfen wurde, sowie mit einer Probe verglichen, die mit symmetrischen Pulsationszyklen (jeweils 1,5 min für Druckan- und Abstieg) behandelt worden war. Die Probe aus dem Beispiel 2 (Erfindung) zeigte die längste Freisetzungskurve, gefolgt vom symmetrisch behandelten Pulsations-Material (Vergleich); die kürzeste Freisetzungskurve zeigte das vorbelegte Ausgangsmaterial, das keiner Druckbehandlung unterzogen worden war.

Das Versuchsergebnis verdeutlicht am Beispiel Ketoprofen, dass aus den inneren Oberflächen am langsamsten freigesetzt wird (sustained release), dass mit dem erfindungsgemäßen Verfahren der aktive Transport in die innere Oberfläche der Trägermatrix am effektivsten durchgeführt werden kann.

### Beispiel 3: Imprägnierung eines porösen organischen Trägerpolymers (Accurel^{®}) mit einem Siliconöl

20 g Accurel**^{®}**-Granulat (Fa. Akzo; hochporöses Polypropylen) wurden in einen Einsatzbehälter (Volumen 0,5 I) eingebracht, der mit Metallsinter-Platten oben und unten verschlossen wurde. Der Einsatzbehälter wurde in den Druckautoklaven einer Hochdruckextraktions-Anlage eingesetzt. Die Autoklav wurde zunächst bei 96 °C (eingestellt mittels Mantelheizung) mit Propan auf einen Druck von 100 bar gebracht. Dann wurden 10 g Siliconöl (Dimethylpolysiloxan mit einer Viskosität von 10 000 mPas) vor dem Autoklaven zugepumpt und gemeinsam mit 1 kg Propan isotherm und isobar im Kreislauf umgewälzt, um eine gleichmäßige Verteilung des Siliconöles im Schüttbett der Accurel-Trägermatrix zu erreichen. Anschließend wurde der Druck auf 43 bar abgesenkt, wodurch die Löslichkeit des Siliconöles im Propan herabgesetzt wurde.

In 8 Pulsationszyklen wurde daraufhin der Druck von 43 bar (Druckminimum) auf 70 bar (Druckmaximum) erhöht (Zeit für den Druckanstieg: 2 min) und abgesenkt (Zeit für den Druckabfall: 5 s). Abschließend wurde die Anlage auf Atmosphärendruck gebracht und das Ergebnis der Imprägnierung beurteilt.

Im Gegensatz zu Accurel-Proben, die vor der erfindungsgemäßen Pulsation aus dem Autoklaven entnommen wurden, und auf deren Oberflächen deutlich Siliconöl anhaftend war, war das Siliconöl bei den gemäß Beispiel 3 imprägnierten Proben nahezu vollständig von der Oberfläche der Polypropylen-Matrix verschwunden und in das Innere des polymeren Trägers gewandert. Das Ergebnis war deutlich schlechter, wenn zum Vergleich symmetrische Pulsationszyklen im analogen Druckbereich durchgeführt wurden (jeweils 1 min für Druckanstieg und -abfall).

Die Erfindung betrifft somit insbesondere ein Verfahren zum Imprägnieren einer Trägermatrix mit festen und/oder flüssigen Verbindungen mit Hilfe komprimierter Gase, das im Wesentlichen dadurch gekennzeichnet ist, dass die feste(n) und/oder flüssige(n) Verbindung(en) (Imprägnierstoff) und die unlösliche Trägermatrix mit einem komprimierten Gas(-gemisch) bei Gasdichten zwischen 0,15 und 1,3 kg/l unter mindestens zwei unsymmetrisch verlaufenden Druckwechselabfolgen (Pulsationen) in der Weise in Kontakt gebracht werden, dass pro Einzelpulsation mit einer Dauer zwischen 5 s und 60 min die jeweilige Zeitspanne zum Erreichen des Druckmaximums größer ist als die Zeitspanne der Druckabsenkung zum Minimum, wobei das absolute Druckminimum durch das minimale Lösevermögen des Gas(-gemisch)es für den Imprägnierstoff festgelegt wird und das absolute Druckmaximum durch die maximale Löslichkeit der Imprägnierstoffe im komprimierten Gas(-gemisch). Das Verfahren zeichnet sich dadurch aus, dass sowohl eine Vielzahl an Imprägnierstoffen wie beispielsweise biologisch aktive Verbindungen, technische Stoffe oder metallorganische Verbindungen, als auch Träger-Matrices mit biologischem Ursprung sowie organische oder anorganische Stoffe eingesetzt werden können, die alle große und/oder schwer zugängliche innere Oberflächen aufweisen. Mit diesem Verfahren, das vorzugsweise mit komprimiertem Kohlendioxyd, Propan, Butan, Ethan oder auch Ammoniak durchgeführt wird, kann sowohl unbehandeltes Trägermaterial als auch bereits vorgecoatetes Material behandelt werden. Als Ergebnis werden imprägnierte Stoffe erhalten, deren innere Oberflächen weitgehend homogen mit den Imprägnierstoffen belegt sind und die vor allem im pharmazeutischen, agrochemischen, kosmetischen und technischen Bereich eingesetzt werden können.

## Patentansprüche

1. Verfahren zum Imprägnieren einer Trägermatrix mit festen und/oder flüssigen Verbindungen mit Hilfe komprimierter Gas(-gemische), mittels Pulsationen,
**dadurch gekennzeichnet,**
**dass** die feste(n) und/oder flüssige(n) Verbindung(en) (Imprägnierstoff) und die unlösliche Trägermatrix mit einem komprimierten Gas(-gemisch) bei Gas(-gemisch)dichten von 0,15 bis 1,3 kg/l unter mindestens zwei unsymmetrisch verlaufenden Druckwechselabfolgen (Pulsationen) in der Weise in Kontakt gebracht werden, dass pro Einzelpulsation mit einer Dauer von 5 s bis 60 min die jeweilige Zeitspanne zum Erreichen des Druckmaximums größer ist als die Zeitspanne der Druckabsenkung zum Minimum und wobei die Imprägnierung im überkritischen Zustand erfolgt.

2. Verfahren nach Anspruch 1,
**dadurch gekennzeichnet,**
**dass** als Imprägnierstoff biologisch aktive Verbindungen, insbesondere pharmazeutische, agrochemische und kosmetische Wirkstoffe, oberflächenaktive Mittel, oberflächenreaktive Verbindungen oder metallorganische Verbindungen eingesetzt werden.

3. Verfahren nach Anspruch 2,
**dadurch gekennzeichnet,**
**dass** als Imprägnierstoff Vitamine, Nutraceuticals, Pflanzenbehandlungsmittel, Biozide, Phytohormone, Aromastoffe, Farbstoffe, Dispergiermittel oder Emulgatoren verwendet werden.

4. Verfahren nach einem der Ansprüche 1 bis 3,
**dadurch gekennzeichnet,**
**dass** als Trägermatrix eine biologischen Ursprungs, insbesondere Lebensmittel, Futtermittel, Saatgut, sowie organische oder anorganische Trägermatrices eingesetzt werden.

5. Verfahren nach einem der Ansprüche 1 bis 3,
**dadurch gekennzeichnet,**
**dass** als Trägermatrix synthetische, semi-synthetische oder natürliche organische Polymere, wie z.B. Polyethylene, Polypropylene, Polyglykolsäuren, oder Kohlenhydrate, anorganische Trägerstoffe, wie z.B. Siliciumdioxide, gefällte oder pyrogene Kieselsäuren oder Kieselgele, Alumosilikate, Zeolithe, Aluminiumoxide, Titandioxide oder Bentonite oder andere Katalysatorgrundstoffe wie Aktivkohlen, verwendet werden.

6. Verfahren nach einem der Ansprüche 1 bis 5,
**dadurch gekennzeichnet**
**dass** Gas(-gemische) bei Verfahrensdrücken von 5 bis 800 bar, bevorzugt von 50 bis 500 bar, eingesetzt werden.

7. Verfahren nach einem der Ansprüche 1 bis 6,
**dadurch gekennzeichnet,**
**dass** es mit komprimiertem Kohlendioxid, Propan, Butanen, Ethan, Ethylen, Dimethylether, Ammoniak, halogenierten Kohlenwasserstoffen oder deren Mischungen durchgeführt, wird.

8. Verfahren nach einem der Ansprüche 1 bis 7,
**dadurch gekennzeichnet,**
**dass** die Verfahrenstemperatur bei 31°C bis 200 °C liegt.

9. Verfahren nach einem der Ansprüche 1 bis 8,
**dadurch gekennzeichnet,**
**dass** die Gas(-mischungs)dichte bei 0,4 bis 1,0 kg/l liegt.

10. Verfahren nach einem der Ansprüche 1 bis 9,
**dadurch gekennzeichnet,**
**dass** die Dauern der Einzelpulsationen voneinander abweichen.

11. Verfahren nach einem der Ansprüche 1 bis 10,
**dadurch gekennzeichnet,**
**dass** die Zeitspannen für die Druckerhöhung und/oder die Zeitspannen für die Druckabsenkung der Einzelpulsationen untereinander voneinander abweichen.

12. Verfahren nach einem der Ansprüche 1 bis 11,
**dadurch gekennzeichnet,** wie
dass dem Gas(-gemisch) Hilfsstoffe, wie Wasser oder organische Lösemittel aus der Reihe kurzkettiger Alkohole, Ketone oder Ester in Konzentrationen bis zu 20 Gew.-%, zugesetzt werden.

13. Verfahren nach einem der Ansprüche 1 bis 12,
**dadurch gekennzeichnet,**
**dass** dem Gas(-gemisch) Schleppmittel zugesetzt werden.

14. Verfahren nach einem der Ansprüche 1 bis 13,
**dadurch gekennzeichnet,**
**dass** die Hilfsstoffe und/oder Schleppmittel dem Imprägnierstoff zugegeben werden, besonders bevorzugt unter Normaldruck.

15. Verfahren nach einem der Ansprüche 1 bis 14,
**dadurch gekennzeichnet,**
**dass** es diskontinuierlich durchgeführt wird.

16. Verfahren nach einem der Ansprüche 1 bis 15,
**dadurch gekennzeichnet,**
**dass** ein Trägermaterial eingesetzt wird, das mit Imprägnierstoffen vorbelegt ist.

17. Verfahren nach einem der Ansprüche 1 bis 16,
**dadurch gekennzeichnet,**
**dass** die Komponenten vor der Pulsation auf den Verfahrensdruck gebracht werden, bei dem die Imprägnierstoffe ihr optimales Löslichkeitsverhalten zeigen, dann das Gas(-gemisch) im überkritischen Bereich so im Kreis gefahren wird, dass sich die Imprägnierstoffe auf dem Trägermaterial verteilen und anschließend der Verfahrensdruck so reduziert wird, dass sich die Imprägnierstoffe auf den Oberflächen des Trägermaterials ablagern.

18. Verfahren nach Anspruch 5,
**dadurch gekennzeichnet,**
**dass** als Trägermatrix Polyethylene, Polypropylene, Polyglykolsäuren, Siliciumdioxide, gefällte oder pyrogene Kieselsäuren oder Kieselgele, Alumosilikate oder Zeolithe verwendet werden.

19. Verfahren nach Anspruch 12,
**dadurch gekennzeichnet,**
**dass** es sich bei den Hilfsstoffen um Wasser oder organische Lösemittel aus der Reihe kurzkettiger Alkohole, Ketone oder Ester handelt.

20. Verfahren nach Anspruch 13,
**dadurch gekennzeichnet,**
**dass** das Schleppmittel ausgewählt wird aus organischen Aminen oder Ammoniak.

## Claims

1. Method of impregnating a carrier matrix with solid and/or liquid compounds using compressed gas(mixtures) by means of pulsations, **characterized in that** the solid and/or liquid compound(s) (impregnating material) and the insoluble carrier matrix are brought into contact with a compressed gas(mixture) at gas(mixture) densities of 0.15 to 1.3 kg/l under at least two unsymmetrical pressure-change cycles (pulsations) in such a manner that, per individual pulsation of a duration of 5 s to 60 min, the respective time period to achieve the pressure maximum is greater than the time period for pressure reduction to the minimum and wherein the impregnation takes place in a supercritical state.

2. Method according to Claim 1, **characterized in that** biologically active compounds, in particular pharmaceutical, agrochemical or cosmetic active compounds, surface-active agents, surface-reactive compounds or organometallic compounds are used as impregnating material.

3. Method according to Claim 2, **characterized in that** vitamins, nutraceuticals, plant-treatment agents, biocides, phytohormones, aroma substances, pigments, dispersants or emulsifiers are used as impregnating material.

4. Method according to one of Claims 1 to 3,
**characterized in that** a carrier matrix of biological origin, in particular a food, feed, seed material, or organic or inorganic carrier matrix, is used.

5. Method according to one of Claims 1 to 3,
**characterized in that** synthetic, semisynthetic or natural organic polymers, such as for example polyethylenes, polypropylenes, polyglycolic acids or carbohydrates, inorganic carrier materials, such as for example silicon dioxides, precipitated or pyrogenic silicas or silica gels, aluminosilicates, zeolites, aluminium oxides, titanium dioxides or bentonites or other catalyst base materials such as activated carbons, are used as carrier matrix.

6. Method according to one of Claims 1 to 5,
**characterized in that** gas(mixtures) are used at process pressures of 5 to 800 bar, preferably of 50 to 500 bar.

7. Method according to one of Claims 1 to 6,
**characterized in that** it is carried out using compressed carbon dioxide, propane, butanes, ethane, ethylene, dimethyl ether, ammonia, halogenated hydrocarbons or their mixtures.

8. Method according to one of Claims 1 to 7,
**characterized in that** the process temperature is 31°C to 200°C.

9. Method according to one of Claims 1 to 8,
**characterized in that** the gas(mixture) density is 0.4 to 1.0 kg/l.

10. Method according to one of Claims 1 to 9,
**characterized in that** the durations of the individual pulsations differ from one another.

11. Method according to one of Claims 1 to 10,
**characterized in that** the time periods for the pressure increase and/or the time periods for the pressure reduction of the individual pulsations differ among one another from one another.

12. Method according to one of Claims 1 to 11,
**characterized in that** auxiliaries, such as water or organic solvents from the series of short-chain alcohols, ketones and esters, are added to the gas (mixture) in concentrations up to 20% by weight.

13. Method according to one of Claims 1 to 12,
**characterized in that** entrainers are added to the gas (mixture) .

14. Method according to one of Claims 1 to 13,
**characterized in that** the auxiliaries and/or entrainers are added to the impregnating material, particularly preferably under atmospheric pressure.

15. Method according to one of Claims 1 to 14,
**characterized in that** it is carried out batchwise.

16. Method according to one of Claims 1 to 15,
**characterized in that** a carrier material is used that is precoated with impregnating materials.

17. Method according to one of Claims 1 to 16,
**characterized in that** the components are brought to the process pressure, at which the impregnating materials exhibit their optimum solubility behaviour, before the pulsation, then the gas(mixture) is recirculated in the supercritical range in such a manner that the impregnating materials are distributed on the carrier material, and subsequently the process pressure is reduced in such a manner that the impregnating materials deposit on the surfaces of the carrier material.

18. Method according to Claim 5, **characterized in that** polyethylenes, polypropylenes, polyglycolic acids, silicon dioxides, precipitated or pyrogenic silicas or silica gels, aluminosilicates or zeolites are used as carrier matrix.

19. Method according to Claim 12, **characterized in that** the auxiliary is water or organic solvents from the series of short-chain alcohols, ketones and esters.

20. Method according to Claim 13, **characterized in that** the entrainer is selected from organic amines or ammonia.

## Revendications

1. Procédé pour l'imprégnation d'une matrice de support avec des composés liquides et/ou solides, à l'aide de (mélanges de) gaz comprimés, au moyen des pulsations, **caractérisé en ce qu'**on met en contact le(s) composé(s) liquide(s) et/ou solide(s) (substance d'imprégnation) et la matrice de support insoluble avec un (mélange de) gaz comprimé à des densités de (mélange de) gaz de 0,15 à 1,3 kg/l sous au moins deux successions de changements de pression (pulsations) se déroulant asymétriquement de sorte que, par pulsation individuelle ayant une durée de 5 s à 60 min, le laps de temps respectif pour l'obtention du maximum de pression est supérieur aux laps de temps à l'abaissement de pression conduisant au minimum, et dans lequel l'imprégnation s'effectue à l'état supercritique.

2. Procédé selon la revendication 1, **caractérisé en ce qu'**on utilise comme substance d'imprégnation des composés biologiquement actifs, en particulier des substances actives pharmaceutiques, chimiques pour l'agriculture et cosmétiques, des agents tensioactifs, des composés réactif au surface ou des composés organométalliques.

3. Procédé selon la revendication 2, **caractérisé en ce qu'**on utilise comme substance d'imprégnation des vitamines, des nutricaments, des produits phytosanitaires, des biocides, des phyto-hormones, des arômes, des colorants, des dispersants ou des émulsifiants.

4. Procédé selon l'une quelconque des revendications 1 à 3, **caractérisé en ce qu'**on utilise comme matrice de support une matrice de support d'origine biologique, en particulier un produit alimentaire, un aliment pour animaux, une semence, ainsi que des matrices de support organiques ou inorganiques.

5. Procédé selon l'une quelconque des revendications 1 à 3, **caractérisé en ce qu'**on utilise comme matrice de support des polymères organiques synthétiques, semi-synthétiques ou naturels, comme par exemple des polyéthylènes, des polypropylènes, des poly(acide glycolique)s ou des glucides, des matières de support inorganiques, comme par exemple des dioxydes de silicium, des silices précipités ou pyrogénés ou des gels de silice, des aluminosilicates, des zéolithes, des oxydes d'aluminium, des dioxydes de titane ou des bentonites, ou d'autres matières de base pour catalyseurs, telles que des charbons actifs.

6. Procédé selon l'une quelconque des revendications 1 à 5, **caractérisé en ce** les (mélanges de) gaz sont utilisés sous des pressions de processus de 5 à 800 bars, de préférence de 50 à 500 bars.

7. Procédé selon l'une quelconque des revendications 1 à 6, **caractérisé en ce qu'**on l'effectue avec du dioxyde de carbone, du propane, des butanes, de l'éthane, de l'éthylène, de l'éther diméthylique, de l'ammoniac, des hydrocarbures halogénés, comprimés, ou des mélanges de ceux-ci.

8. Procédé selon l'une quelconque des revendications 1 à 7, **caractérisé en ce que** la température de processus est dans la plage de 31°C à 200°C.

9. Procédé selon l'une quelconque des revendications 1 à 8, **caractérisé en ce que** la densité du (mélange de) gaz est dans la plage de 0,4 à 1,0 kg/l.

10. Procédé selon l'une quelconque des revendications 1 à 9, **caractérisé en ce que** les durées des pulsations individuelles diffèrent entre elles.

11. Procédé selon l'une quelconque des revendications 1 à 10, **caractérisé en ce que** les laps de temps pour l'élévation de pression et/ou les laps de temps pour la diminution de pression des pulsations individuelles diffèrent entre elles.

12. Procédé selon l'une quelconque des revendications 1 à 11, **caractérisé en ce qu'**on ajoute au (mélange de) gaz des adjuvants, tels que l'eau ou des solvants organiques de la série des alcools, cétones et esters à courte chaîne, à des concentrations allant jusqu'à 20 % en poids.

13. Procédé selon l'une quelconque des revendications 1 à 12, **caractérisé en ce qu'**on ajoute des agents d'entraînement au (mélange de) gaz.

14. Procédé selon l'une quelconque des revendications 1 à 13, **caractérisé en ce que** les adjuvants et/ou agents d'entraînement sont ajoutés à la substance d'imprégnation, de préférence sous la pression normale.

15. Procédé selon l'une quelconque des revendications 1 à 14, **caractérisé en ce qu'**il est effectué en mode discontinu.

16. Procédé selon l'une quelconque des revendications 1 à 15, **caractérisé en ce qu'**on utilise un matériau de support qui est chargé au préalable avec des substances d'imprégnation.

17. Procédé selon l'une quelconque des revendications 1 à 16, **caractérisé en ce que** les composants sont mis sous la pression de processus sous laquelle les substances d'imprégnation présentent leur comportement de solubilité maximale avant la pulsation, puis le (mélange de) gaz est mis en circuit dans la domaine supercritique, de manière que les substances d'imprégnation se répartissent sur le matériau de support, et ensuite la pression de processus est abaissée de manière que les substances d'imprégnation se déposent sur les surfaces du matériau de support.

18. Procédé selon la revendication 5, **caractérisé en ce qu'**on utilise comme matrice de support des polyéthylènes, des polypropylènes, des poly(acide glycolique)s, des dioxydes de silicium, des silices précipités ou pyrogénés ou des gels de silice, des aluminosilicates ou des zéolithes.

19. Procédé selon la revendication 12, **caractérisé en ce** les adjuvants consistent en eau ou en des solvants organiques de la série des alcools, cétones ou esters à courte chaîne.

20. Procédé selon la revendication 13, **caractérisé en ce que** l'agent d'entraînement est choisi parmi des amines organiques et l'ammoniac.
